# FASCICULE DE BREVET EUROPEEN

(11) **EP 3 238 473 B1**
(45) Date de publication et mention de la délivrance du brevet: **06.11.2019**
(21) Numéro de dépôt: 15823685.1
(22) Date de dépôt: 18.12.2015
(51) Int. Cl.: H04W 8/20

(54) **OBTENTION DE DROITS D'ACCES À UN RESEAU MIS EN OEUVRE PAR UN OBJET COMMUNICANT**
ERHALT VON ZUGRIFFSRECHTEN AUF EIN NETZWERK, IMPLEMENTIERT VON EINEM KOMMUNIKATIONSOBJEKT
OBTAINING OF ACCESS RIGHTS TO A NETWORK, IMPLEMENTED BY A COMMUNICATING OBJECT

(30) Priorité: 24.12.2014 FR 1463341
(43) Date de publication de la demande: 01.11.2017
(73) Titulaire: Orange, 75015 Paris (FR)
(72) Inventeur: MAYER, Emmanuel, 14123 Ifs (FR); ACHEMLAL, Mohammed, 14000 Caen (FR)
(74) Mandataire: Delumeau, François Guy
(86) Numéro de dépôt international: PCT/FR2015/053646
(87) Numéro de publication internationale: WO 2016/102855

(56) Documents cités:
- US-A1- 2008 081 611
- US-A1- 2014 237 101

## Description

### Arrière-plan de l'invention

L'invention se rapporte au domaine général des télécommunications.

Elle concerne plus particulièrement le domaine de la gestion des droits d'accès d'un objet communicant à un réseau de communication.

Par objet communicant ou connecté, on entend un objet doté de la capacité d'échanger des informations, par l'intermédiaire d'un réseau de communication, avec selon les cas, un autre objet, un terminal de communication ou encore un équipement informatique du réseau de communication. Ainsi, un terminal mobile, une montre adaptée pour transmettre des informations à un terminal mobile à travers un réseau de communication étendu, tel que le réseau Internet, constituent des exemples d'objets connectés.

Pour connecter un objet communicant à un réseau de communication, il est nécessaire d'utiliser soit un abonnement au réseau de communication propre à l'objet communicant, soit une passerelle d'accès disposant elle-même d'un abonnement au réseau de communication. Une telle passerelle d'accès est par exemple une passerelle résidentielle d'accès au service d'un opérateur de réseau de communication ou un téléphone mobile configuré en passerelle d'accès.

La première solution présente l'avantage de permettre à l'objet communicant de se connecter de façon autonome et transparente pour son utilisateur à tous les points d'accès du réseau de communication compatibles avec les moyens de connexion de l'objet communicant. Mais elle présente l'inconvénient d'être coûteuse puisqu'elle suppose de souscrire autant d'abonnements que d'objets communicants à connecter au réseau de communication.

La seconde solution est moins coûteuse, puisqu'elle ne nécessite l'utilisation que d'un seul abonnement au réseau de communication quel que soit le nombre d'objets à connecter. Cette seconde solution n'est néanmoins pas satisfaisante car pour connecter un objet communicant à un réseau de communication, elle nécessite au préalable d'apparier l'objet communicant à une passerelle d'accès donnée. Par la suite, l'objet communicant ne peut accéder au réseau de communication que s'il se trouve au voisinage de cette passerelle d'accès. Si cette condition n'est pas réalisée, l'objet communicant devra être à nouveau apparié avec une autre passerelle d'accès se situant dans son voisinage avant de pouvoir se connecter au réseau de communication.

La connexion d'un objet communicant à un réseau de communication est par conséquent une opération coûteuse ou difficile à mettre en œuvre.

Le document US 2014/237101 divulgue un procédé de gestion d'un profil dans une carte intégrée de circuit intégré universel (« UICC »).

Le document US 2008/081611 divulgue un procédé et un système permettant de partager une carte de module d'identité d'abonné (« SIM ») par plusieurs dispositifs.

### Objet et résumé de l'invention

La présente invention permet de pallier notamment ces inconvénients en proposant, selon un premier aspect, un procédé de gestion des droits d'un objet communicant, ce procédé étant mis en œuvre par une plate-forme de gestion des droits d'un réseau de communication. Le procédé de gestion des droits comprend :
- une étape de réception d'un message de signalement en provenance d'un objet communicant ;
- une étape d'envoi à au moins un dispositif localisé à proximité de l'objet communicant, d'une liste comportant au moins un identifiant d'objet communicant localisé à proximité du dispositif ;
- une étape de réception, en provenance du dispositif, d'un message comportant l'identifiant d'un objet communicant de la liste, le dispositif disposant de droits d'accès au réseau de communication, dits droits initiaux, associés à un utilisateur du dispositif;
- une étape d'envoi au dispositif d'un message de description contenant une liste de droits attribuables à l'objet sélectionné, les droits attribuables étant définis à partir des droits initiaux ;
- une étape de réception, en provenance du dispositif, d'un message de demande d'établissement de droits, comprenant une description de droits propres à l'objet, dits droits délégués, sélectionnés parmi la liste de droits attribuables;
- une étape de création d'un profil de communication associé aux droits délégués ; et
- une étape d'envoi du profil à l'objet pour sa configuration.

Corrélativement, l'invention vise aussi une plate-forme de gestion des droits d'un objet communicant, la plate-forme étant associée à un réseau de communication. La plate-forme comprend :
- un module de réception d'un message de signalement en provenance d'un objet communicant ;
- un module d'envoi à au moins un dispositif localisé à proximité de l'objet communicant, d'une liste comportant au moins un identifiant d'objet communicant localisé à proximité du dispositif ;
- un module de réception, en provenance du dispositif, d'un message comportant l'identifiant d'un objet communicant de la liste, le dispositif disposant de droits d'accès au réseau de communication, dits droits initiaux, associés à un utilisateur du dispositif;
- un module d'envoi au dispositif d'un message de description contenant une liste de droits attribuables à l'objet sélectionné, les droits attribuables étant définis à partir des droits initiaux ;
- un module de réception, en provenance du dispositif, d'un message de demande d'établissement de droits, comprenant une description de droits propres à l'objet, dits droits délégués, sélectionnés parmi la liste de droits attribuables;
- un module de création d'un profil de communication associé aux droits délégués ; et
- un module d'envoi du profil à l'objet pour sa configuration.

Conformément à l'invention, la plate-forme de gestion des droits sur réception successive d'un message de signalement en provenance de l'objet communicant et d'une demande d'établissement de droits en provenance d'un dispositif de demande de configuration, crée et génère des droits d'accès propres à l'objet communicant

Les droits d'accès attribués à l'objet communicant, dits droits délégués, sont remarquables en ce qu'ils sont obtenus à partir de droits d'accès initiaux attachés à l'abonnement qu'un utilisateur a souscrit auprès d'un opérateur de réseau pour accéder au réseau de communication. Les droits initiaux correspondent par exemple à un abonnement voix, données et internet en illimité via le réseau de communication. Les droits initiaux spécifient également le nombre d'objets communicants auquel l'utilisateur peut octroyer des droits délégués.

Les droits initiaux et délégués étant attachés à un même abonnement, l'invention permet ainsi à un utilisateur de souscrire un seul abonnement à un réseau de communication lui permettant de connecter un ensemble d'objets communicants. Il n'est ainsi pas nécessaire d'utiliser des abonnements distincts pour autoriser des objets communicants distincts à se connecter au réseau de communication.

De façon avantageuse, l'utilisateur peut, par l'intermédiaire du dispositif de demande de configuration, définir l'étendue des droits délégués qu'il souhaite attribuer à l'objet communicant. Lorsque le réseau de communication dispose de plusieurs réseaux d'accès, comme par exemple un réseau d'accès cellulaire et un réseau d'accès WiFi, l'utilisateur d'un objet communicant, disposant de moyens de communication avec un réseau cellulaire et un réseau Wifi, peut ainsi choisir de ne laisser accéder l'objet communicant qu'à un seul de ces deux réseaux d'accès ou au contraire au deux en fonction des droits délégués que l'utilisateur attribue à l'objet.

Dans un mode de réalisation particulier de l'invention les étapes de création et d'envoi du profil ne sont réalisées que si la demande d'établissement de droits est reçue par la plate-forme dans un intervalle de temps prédéterminé compté à partir de la réception du message de signalement.

La spécification d'un intervalle de temps prédéterminé permet de tenir compte de délais inhabituels dans l'envoi des messages à travers le réseau de communication et d'abandonner automatiquement la configuration de droits délégués en cours lorsque le délai est supérieur à cet intervalle de temps prédéterminé.

Selon un deuxième aspect, décrit dans la revendication 4 le procédé de gestion des droits d'accès est complété par un procédé de demande de configuration d'un objet communicant, ce procédé étant mis en œuvre par un dispositif de communication disposant de droits d'accès à un réseau de communication, dits droits initiaux, associés à un utilisateur du dispositif. Ce procédé comprend :
- une étape de réception en provenance d'une plate-forme de gestion des droits du réseau, d'une liste d'au moins un identifiant d'objet communicant ;
- une étape de sélection d'un objet communicant dans la liste et d'envoi d'un identifiant de l'objet sélectionné à la plate-forme ;
- une étape de réception d'un message comprenant une liste de droits attribuables à l'objet sélectionné, les droits attribuables étant définis à partir des droits initiaux par la plate-forme ; et
- une étape de transmission à la plate-forme d'une demande d'établissement de droits propres à l'objet, dits droits délégués, sélectionnés parmi la liste de droits attribuables.

Corrélativement, l'invention vise aussi un dispositif de demande de configuration d'un objet communicant, ce dispositif disposant de droits d'accès à un réseau de communication, dits droits initiaux, associés à un utilisateur du dispositif. Le dispositif comprend :
- un module de réception, en provenance d'une plate-forme de gestion des droits du réseau, d'une liste d'au moins un identifiant d'objet communicant ;
- un module de sélection d'un objet communicant dans la liste et d'envoi d'un identifiant de l'objet sélectionné à la plate-forme ;
- un module de réception d'un message comprenant une liste de droits attribuables à l'objet sélectionné, les droits attribuables étant définis à partir des droits initiaux par la plate-forme ; et
- un module de transmission à la plate-forme d'une demande d'établissement de droits propres à l'objet, dits droits délégués, sélectionnés parmi la liste de droits attribuables.

L'invention vise aussi un système comportant une plate-forme de gestion des droits d'un objet communiquant et un terminal de communication comprenant un dispositif de demande de configuration.

Lorsqu'un utilisateur souhaite attribuer des droits délégués à un objet communicant via une application sur un terminal de communication selon l'invention, il visualise une liste d'objets communicants se trouvant à proximité de son terminal de communication. Il est à noter que cette liste d'objets communicants peut contenir des objets communicants n'appartenant pas à l'utilisateur. Pour lever cette ambiguïté, sur présentation de cette liste d'objets communicants, l'utilisateur sélectionne celui auquel il souhaite attribuer des droits d'accès et le terminal transmet à la plate-forme de gestion l'identifiant de l'objet sélectionné.

Dans un mode de réalisation particulier de l'invention, l'objet sélectionné est sélectionné parmi un ensemble d'au moins un objet communicant ayant envoyé au dispositif un message d'information indiquant qu'il a préalablement envoyé un message de signalement à la plate-forme.

En d'autres termes, l'objet communicant, après avoir envoyé un message de signalement à la plate-forme de gestion des droits via un point d'accès du réseau de communication, se signale également auprès des terminaux de communication se situant dans son environnement immédiat. Ce deuxième signalement peut par exemple s'effectuer via un canal de communication établi conformément à un standard de communication de données à courte distance de type Bluetooth ou NFC (en anglais « Near Field Communication »).

De façon avantageuse, il est ainsi possible d'améliorer l'expérience de l'utilisateur du terminal en limitant la liste des objets communicants qui lui sont présentés à ceux se situant simultanément à courte distance du terminal de communication et à proximité d'un point d'accès du réseau de communication.

Le réseau configure l'objet communicant en lui fournissant des droits d'accès délégués lui permettant d'accéder au réseau de communication via des points d'accès compatibles avec ses moyens de communication, ces points d'accès sont également adaptés pour recevoir des demandes d'accès au réseau en provenance d'objet communicants et pour relayer ces demandes au réseau qui se charge de mettre en œuvre l'authentification réseau avec ces objets.

De façon avantageuse, l'objet communicant accède au réseau sans devoir au préalable être apparié à une passerelle d'accès et sans que l'objet communicant ne dispose en propre d'un abonnement au réseau de communication.

Dans un mode de réalisation particulier de l'invention, le profil de communication est reçu à travers un canal sécurisé établi entre la plate-forme de gestion des droits et un élément de sécurité de l'objet communicant.

L'élément de sécurité est par exemple une eSIM (en anglais « embedded SIM »), préconfiguré lors de la création de l'objet communicant par son fabricant. En particulier, cet élément de sécurité mémorise des informations associées au fabricant de l'objet communicant, par exemple un certificat de clé publique, une clé privée associée et un identifiant unique de l'objet communicant.

L'utilisation d'un canal de communication sécurisé permet de transmettre le profil de communication à l'élément sécurisé de l'objet communicant bien que ce dernier ne dispose à ce stade que de droits d'accès limités au réseau.

D'autre part, la transmission via un canal sécurise permet d'assurer la confidentialité des échanges d'information entre l'élément de sécurité de l'objet communicant et la plate-forme de gestion des droits.

L'établissement de ce canal sécurisé peut par exemple reposer sur l'utilisation d'une clé privée de type RSA associée au certificat du constructeur de l'objet sauvegardé dans l'élément de sécurité.

Dans un mode de réalisation particulier de l'invention, le procédé d'obtention de droits comprend avant l'étape de réception, une étape d'émission à destination d'au moins un dispositif de communication d'un message d'information indiquant que l'objet communicant a préalablement envoyé le message de signalement.

Comme mentionné précédemment et de façon avantageuse, les terminaux de communication recevant ce message d'information peuvent limiter la liste des objets communicants qu'ils présentent à leur utilisateur à ceux se situant simultanément à courte distance d'eux et à proximité d'un point d'accès du réseau de communication.

Dans un mode particulier de réalisation, les différentes étapes du procédé d'obtention de droits, du procédé de demande de configuration et/ou du procédé de gestion des droits sont déterminées par des instructions de programmes d'ordinateurs.

En conséquence, l'invention vise aussi un programme d'ordinateur sur un support d'informations, ce programme étant susceptible d'être mis en œuvre dans un objet communicant, ce programme comportant des instructions adaptées à la mise en œuvre des étapes d'un procédé de d'obtention de droits tel que décrit ci-dessus.

L'invention vise également un programme d'ordinateur sur un support d'informations, ce programme étant susceptible d'être mis en œuvre dans un terminal de communication, ce programme comportant des instructions adaptées à la mise en œuvre des étapes d'un procédé de demande de configuration d'un objet communicant tel que décrit ci-dessus.

L'invention vise aussi un programme d'ordinateur sur un support d'informations, ce programme étant susceptible d'être mis en œuvre dans une passerelle de gestion des droits ou plus généralement dans un ordinateur, ce programme comportant des instructions adaptées à la mise en œuvre des étapes d'un procédé de gestion des droits tel que décrit ci-dessus.

Ces programmes peuvent utiliser n'importe quel langage de programmation, et être sous la forme de codes source, codes objet, ou de codes intermédiaires entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, RAM, PROM, EPROM, un CD ROM ou, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un quatrième aspect, l'invention vise également un système de gestion des droits comprenant :
- au moins un objet communicant selon l'invention;
- une plate-forme de gestion des droits selon l'invention ; et
- au moins un dispositif de demande de configuration selon l'invention.

### Brève description des dessins

Des caractéristiques et avantages particuliers de la présente invention ressortiront de la description détaillée faite aux figures dans lesquelles :
- la figure 1 illustre un premier exemple de système de gestion des droits selon un mode de réalisation de l'invention ;
- la figure 2 illustre un exemple d'architecture matérielle d'un objet communicant selon l'invention ;
- la figure 3 illustre un exemple d'architecture matérielle d'un dispositif de demande de configuration selon l'invention ;
- la figure 4 illustre un exemple d'architecture matérielle d'une plate-forme de gestion des droits selon l'invention ;
- la figure 5 représente les principales étapes d'un procédé d'obtention de droits, d'un procédé de demande de configuration et d'un procédé de gestion dans un mode particulier de réalisation de l'invention ; et
- la figure 6 illustre un deuxième exemple de système de gestion des droits selon un mode de réalisation de l'invention.

### Description détaillée de l'invention

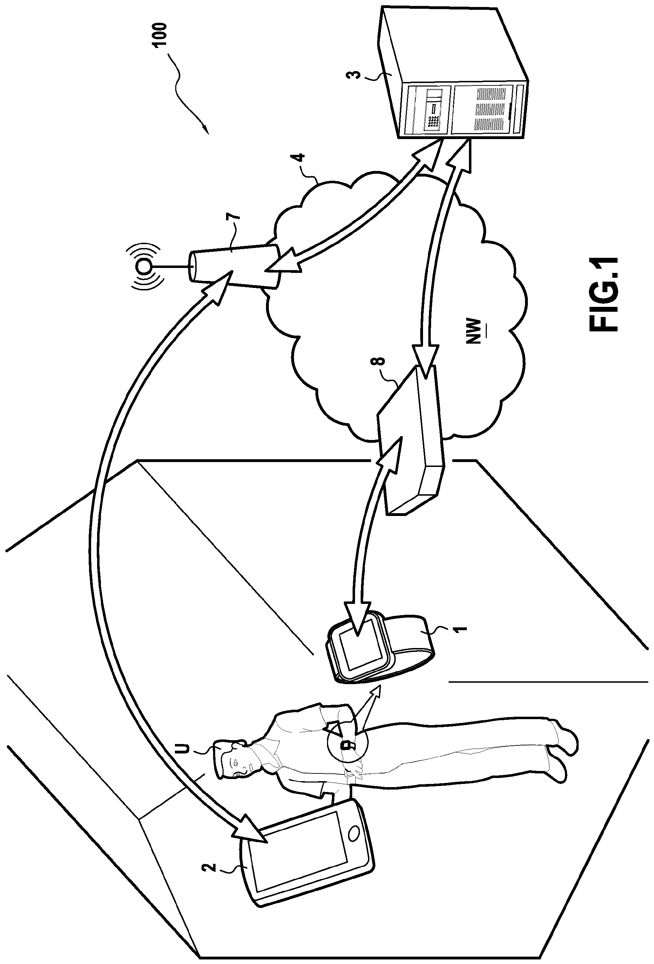

La **figure 1** représente, dans son environnement, un système 100 de gestion des droits d'accès conforme à l'invention, dans un mode particulier de réalisation.

Conformément à l'invention le système 100 de gestion des droits d'accès repose sur une architecture tripartite qui permet à un utilisateur U d'attribuer des droits d'accès à un objet communicant 1 par l'intermédiaire d'un terminal de communication 2 qui constitue un dispositif de demande de configuration, et d'une plate-forme 3 de gestion des droits d'accès, les droits attribués étant associés à un abonnement propre à l'utilisateur U, tel qu'un abonnement souscrit auprès d'un opérateur de réseau. L'abonnement permet à l'utilisateur d'accéder à des services d'un réseau de communication 4.

Le système 100 comprend :
- l'objet communicant 1 ;
- le terminal 2 de communication de l'utilisateur U ; et
- la plate-forme 3 de gestion des droits.

Un objet communicant ou connecté, est un objet adapté pour échanger des informations par l'intermédiaire d'un réseau de communication, avec selon les cas, un autre objet, un terminal de communication ou encore un équipement informatique du réseau de communication. Ainsi, un terminal mobile, une montre adaptée pour transmettre des informations à un terminal mobile via un réseau de communication étendu tel que le réseau Internet, un détecteur de fumée adapté pour communiquer avec un terminal mobile distant afin de signaler la présence de fumée dans une maison constituent des exemples d'objets connectés. Dans l'exemple décrit ici, l'objet communicant 1 est une montre, adaptée pour mesurer des caractéristiques physiques de l'utilisateur qui la porte, par exemple son rythme cardiaque et pour transmettre ces mesures à un dispositif informatique distant (non représenté sur la figure 1) adapté pour traiter ces mesures sur des périodes données.

Le réseau de communication 4 comporte au moins un réseau d'accès à un réseau de communication étendu, par exemple le réseau Internet. Le réseau d'accès peut être un réseau mobile, par exemple « UMTS » (de l'anglais « Universal Mobile Télécommunications System »), ou fixe, par exemple le réseau Ethernet, filaire ou sans fil, par exemple un réseau d'accès WiFi, etc.

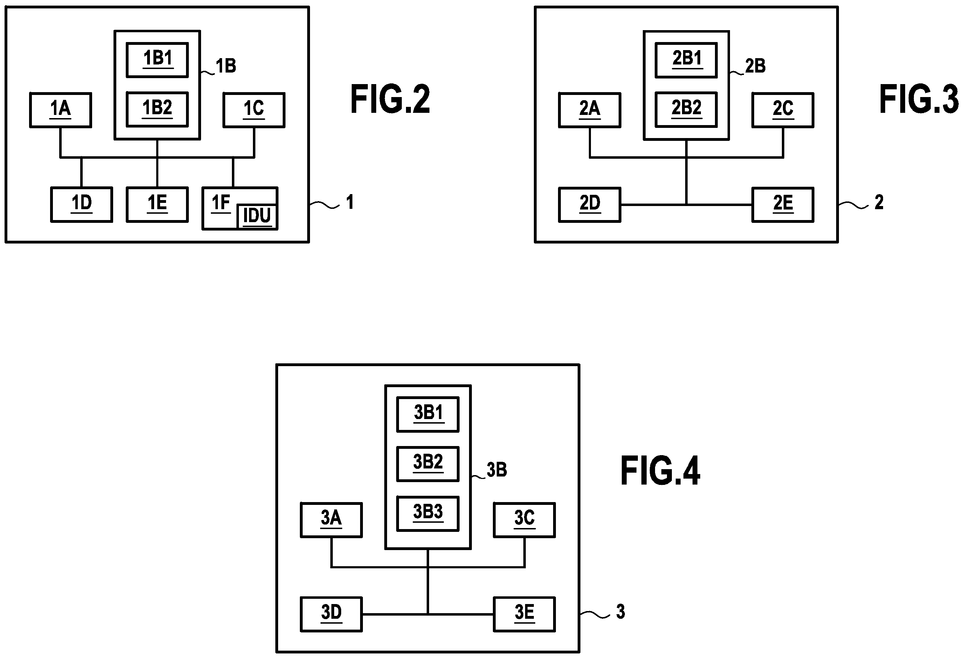

L'objet communicant 1 est un objet communicant conforme à l'invention. Son architecture matérielle est illustrée schématiquement à la **figure 2****.** Ainsi, l'objet communicant 1 comporte notamment un processeur 1A, une mémoire morte 1B, une mémoire vive 1C, une mémoire non volatile 1D, un module de communication 1E sur le réseau de communications 4 et un élément de sécurité 1F.

L'objet communicant 1 se voit octroyer des droits délégués par l'utilisateur U, conformément au procédé d'obtention de droits selon l'invention. Les droits délégués comprennent un profil de communication adapté pour permettre à l'objet communicant d'accéder à tout ou à une partie des services fournis par le réseau de communication 4. Les droits délégués sont dérivés de droits initiaux associés à l'utilisateur U dans le cadre de l'abonnement qu'il a souscrit auprès d'un opérateur de réseau pour accéder au réseau de communication 4. Par exemple, l'utilisateur U possède un abonnement qui lui permet d'accéder au réseau mobile voix et données en illimité. On suppose que l'abonnement prévoit également que l'utilisateur U a le droit de connecter un nombre donné d'objets communicants. Ainsi, à partir de ces droits initiaux, il est généré des droits délégués pour l'objet communicant 1 qui permettent à l'objet communicant 1 d'accéder au réseau en mode données pendant une durée déterminée, de télécharger une quantité limitée de données, etc. Les droits délégués à l'objet communicant 1 sont octroyés par l'utilisateur U et dérivés de ses droits d'accès initiaux. On comprend que les droits délégués, plus précisément les caractéristiques propres à l'accès au réseau, octroyés par l'utilisateur U à un de ses objets communicants restent dans la limite des droits initiaux. Par exemple, la durée pendant laquelle l'objet communicant peut communiquer, la quantité de données qu'il peut télécharger et envoyer sont égales ou inférieures aux valeurs convenues lors de la souscription de l'abonnement par l'utilisateur U.

L'élément de sécurité 1F mémorise des informations associées au fabricant de l'objet communicant 1, par exemple un certificat de clé publique, une clé privée associée et un identifiant unique IDU de l'objet communicant 1. Ces informations sont destinées par exemple à une première authentification de l'objet communicant 1 et à l'établissement d'un canal de communication sécurisé avec la plate-forme de gestion des droits 3 du réseau de communication 4. Le certificat et la clé privée ont été délivrés et installés par le fabricant de l'objet communicant 1 lors de la fabrication de celui-ci. Le certificat est destiné à identifier l'objet et son fabricant. Lors de l'attribution de droits délégués à l'objet communicant, un opérateur de réseau peut choisir de n'accorder des droits qu'à des objets communicants de certains fabricants. De manière classique, la clé privée est destinée à être utilisée pour authentifier l'objet communicant 1. L'élément de sécurité 1F est également agencé pour mémoriser un profil de communication comprenant des données permettant à l'objet communicant 1 d'accéder au réseau de communication 4. Le profil de communication est délivré par le réseau de communication 4 et comprend des données d'accès au réseau. De manière classique, le profil comprend une clé d'authentification Kᵢ et un identifiant de type numéro « IMSI » (de l'anglais « International Mobile Subscriber Identity ») qui permet au réseau d'identifier l'utilisateur U. L'élément de sécurité 1F est également agencé pour recevoir du réseau et mémoriser des algorithmes cryptographiques utilisés lors de l'accès au réseau.

Cet élément de sécurité 1F est par exemple de type « eSIM » (en anglais « embedded Subscriber Identity Module »).

En variante, l'élément de sécurité 1F est un environnement sécurisé.

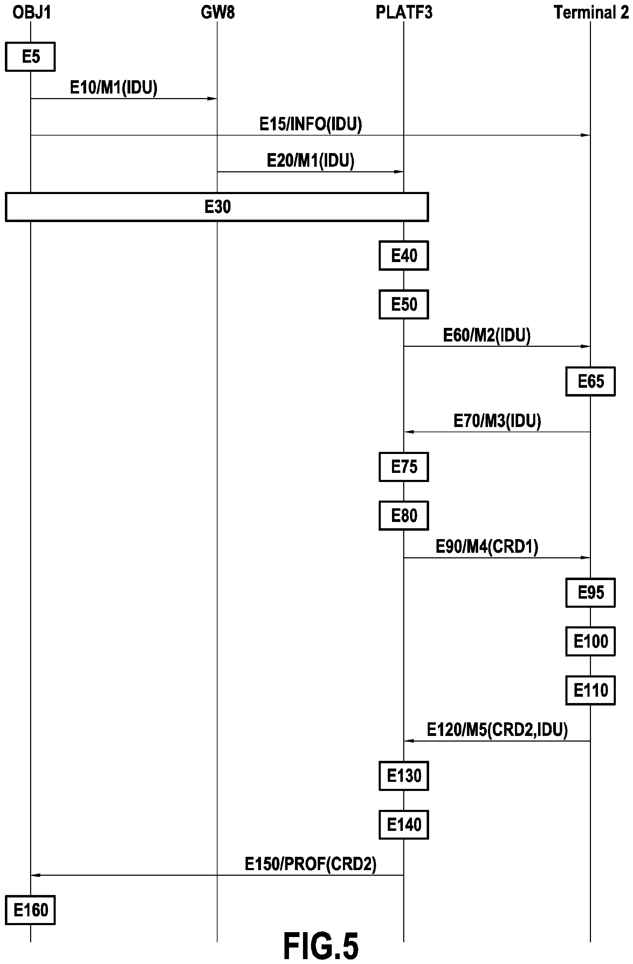

La mémoire morte 1B de l'objet communicant 1 constitue un support d'enregistrement lisible par le processeur 1A et sur lequel est enregistré un programme d'ordinateur conforme à l'invention, comportant des instructions pour l'exécution des étapes d'un procédé d'obtention de droits conforme à l'invention, les étapes de ce procédé d'obtention de droits étant décrites ultérieurement en référence à la figure 5, dans un mode particulier de réalisation.

Ce programme d'ordinateur définit de façon équivalente des modules fonctionnels de l'objet communicant 1, tels qu'un module 1B1 d'émission d'un message de signalement à destination de la plate-forme de gestion des droits 3 et un module 1B2 de réception d'un profil de communication propre au réseau 4, ce profil étant associé dans le réseau à des droits propres à l'objet 1, dits droits délégués. Les fonctions de ces modules sont décrites plus en détail en référence aux étapes du procédé d'obtention de droits illustrées à la figure 5.

L'architecture d'un terminal de communication 2 qui constitue un exemple de dispositif de demande de configuration selon un exemple de réalisation va maintenant être décrite en relation avec la **figure 3****.**

Le terminal de communication 2 comporte un processeur 2A, une mémoire morte 2B, une mémoire vive 2C, une mémoire non volatile 2D, et un module de communication 2E.

La mémoire morte 2B du terminal de communication 2 constitue un support d'enregistrement lisible par le processeur 2A et sur lequel est enregistré un programme d'ordinateur conforme à l'invention, comportant des instructions pour l'exécution des étapes d'un procédé de demande de configuration conforme à l'invention, les étapes de ce procédé étant décrites ultérieurement en référence à la figure 5, dans un mode particulier de réalisation.

Ce programme est par exemple mis en œuvre dans un environnement sécurisé de type TEE (en anglais « Trusted Execution Environment ») du terminal de communication.

Ce programme d'ordinateur définit de façon équivalente des modules (logiciels) fonctionnels du terminal de communication 2, tels que notamment un module 2B1 de communication avec la plate-forme 3 de gestion des droits et un module 2B2 de sélection d'un objet communicant parmi une liste d'objets communicants. Leurs fonctions sont décrites plus en détail ci-dessous en référence aux étapes du procédé de demande de configuration illustrées à la figure 5.

Aucune limitation n'est attachée à la nature du terminal 2 de communication qui peut être par exemple, comme illustré à la figure 1, un téléphone mobile intelligent (ou « smartphone » en anglais) permettant à l'utilisateur U d'accéder au réseau de communication 4 conformément à l'abonnement qu'il a préalablement souscrit auprès de l'opérateur du réseau 4.

Cet abonnement associe à l'utilisateur U des droits initiaux, comme présentés précédemment, décrivant les services du réseau 4 de communication accessibles à cet utilisateur ou caractéristiques de l'accès au réseau. Dans l'exemple envisagé ici, les droits initiaux correspondent à un abonnement voix, données et internet en illimité via le réseau de communication 4, ces droits initiaux permettant également d'attribuer des droits délégués à un nombre maximal de deux objets connectés.

Les droits attachés à l'abonnement de l'utilisateur U sont gérés par la plate-forme 3 de gestion des droits.

La plate-forme de gestion des droits 3 va maintenant être décrite en relation avec la **figure 4****.**

La plate-forme 3 comporte un processeur 3A, une mémoire de stockage 3B de type flash ou EEPROM, une mémoire vive 3C, une mémoire non volatile 3D, et un module de communications 3E. La plate-forme 3 peut s'appuyer sur un « HLR » (de l'anglais « Home Location Register ») des réseaux cellulaires.

La mémoire de stockage 3B de la plate-forme de gestion des droits 3 constitue un support d'enregistrement lisible par le processeur 3A et sur lequel est enregistré un programme d'ordinateur conforme à l'invention, comportant des instructions pour l'exécution des étapes d'un procédé de gestion des droits conforme à l'invention, les étapes de ce procédé de gestion étant décrites ultérieurement en référence à la figure 5, dans un mode particulier de réalisation.

Ce programme d'ordinateur définit de façon équivalente des modules (logiciels) fonctionnels de la plate-forme de gestion des droits 3, tels que notamment un module 3B1 de communication avec l'objet communicant 1, un module 3B2 de communication avec des terminaux de communication et un module 3B3 de création d'un profil de communication. Leurs fonctions sont décrites plus en détail ci-dessous en référence aux étapes du procédé de gestion illustrées à la figure 5.

Nous allons maintenant décrire en référence à la **figure 5****,** des étapes du procédé d'obtention de droits mises en œuvre par l'objet communicant 1, des étapes du procédé de demande de configuration mises en œuvre par un terminal de communication 2 qui constitue un dispositif de demande de configuration et des étapes du procédé de gestion mises en œuvre par la plate-forme de gestion des droits 3 dans un premier exemple de réalisation de l'invention.

Dans le premier exemple décrit ici et correspondant au système décrit en relation avec la figure 1, le réseau de communication 4 comporte un premier réseau d'accès cellulaire accessible par un nœud d'accès 7, tel qu'une station de base ou un eNodeB et un deuxième réseau d'accès sans fil au réseau de communication étendu accessible par une passerelle d'accès 8.

L'objet communicant 1 est une montre connectée, dont le module de communication 1E est apte à se connecter au réseau d'accès sans fil du réseau de communication 4.

Le terminal de communication 2 est un terminal intelligent permettant à l'utilisateur U de se connecter, grâce à son abonnement, au réseau 4 de communication via le nœud d'accès 7 du réseau d'accès cellulaire.

Afin d'accéder au réseau de communication 4 par l'intermédiaire du nœud d'accès 7, l'utilisateur s'est vu attribuer une carte SIM, insérée dans le terminal 2 et permettant au réseau de communication 4 d'authentifier l'utilisateur U et d'identifier les droits d'accès attribués au terminal 2.

L'utilisateur U dispose de droits d'accès initiaux associés à son abonnement qui définissent les ressources dont l'utilisateur dispose lors de ses accès au réseau de communication 4. Par exemple, l'utilisateur U souscrit un abonnement qui lui permet d'accéder au réseau voix et données et à Internet en illimité. Dans cet exemple, les droits initiaux permettent d'attribuer des droits délégués à deux objets connectés. Les droits initiaux sont sauvegardés dans une base de données de droits (non représentée sur la figure 1) située dans le réseau de communication 4, par exemple dans la plate-forme de gestion des droits 3.

A l'initialisation, l'objet communicant 1 dispose uniquement de droits d'accès limités à un échange de données avec la plate-forme de gestion des droits 3. L'accès limité permet à l'objet communicant 1 d'avoir accès au réseau sans cependant pouvoir transmettre de données vers d'autres objets ou terminaux. L'accès limité, de l'objet communicant 1, est destiné à maintenir sa connectivité au réseau jusqu'à ce que des droits délégués lui soient accordés. Cet accès limité est fourni systématiquement à tous les objets possédant un élément de sécurité personnalisé par un fabricant reconnu par l'opérateur du réseau.

Dans une étape initiale E5, l'utilisateur U initie l'attribution de droits délégués à l'objet communicant 1, par exemple en sélectionnant une option de configuration accessible depuis une interface homme machine de l'objet communicant 1.

En réponse à l'action de l'utilisateur U, l'objet communicant 1 émet, lors d'une étape E10, un message M1 de signalement à destination de la plate-forme de gestion des droits 3 du réseau de communication 4.

Le message de signalement M1 comporte notamment l'identifiant unique IDU de l'objet communicant 1, cet identifiant unique IDU étant mémorisé dans l'élément de sécurité 1F de l'objet communicant 1. Comme décrit précédemment, l'élément de sécurité 1F est personnalisé à la fabrication en y enregistrant l'identifiant IDU, un certificat signé par le fabricant de l'objet ou par une autorité de confiance tierce et une clé privée associée à ce certificat.

Dans l'exemple décrit ici, le message M1 est émis, au moyen du module de communication 1E de l'objet connecté 1, sur un canal de communication établi conformément au protocole Wifi avec la passerelle résidentielle 8.

En variante, le message M1 est émis sur un canal de communication de type BlueTooth ou NFC.

Dans une étape suivante E15, l'objet communicant 1 émet, à destination de l'ensemble des terminaux de communication situés dans son voisinage, un message d'information INFO contenant son identifiant IDU. Ce message d'information INFO indique que l'objet communicant 1 a préalablement émis un message M1 de signalement à destination de la plate-forme 3. Le message d'information INFO est destiné à proposer à l'utilisateur de n'accorder des droits délégués qu'aux seuls objets qui ont émis ce message.

La passerelle résidentielle 8 est configurée pour recevoir des messages de signalement provenant d'objets communicants et pour transférer ces messages de signalement vers la plate-forme de gestion des droits 3. Le message M1 est ainsi reçu par la passerelle résidentielle 8 et retransmis à la plate-forme de gestion des droits 3 du réseau de communication 4 lors d'une étape E20.

Dans une étape suivante E30, la plate-forme de gestion des droits 3 authentifie l'objet communicant 1 et établit un canal de communication sécurisé avec l'élément de sécurité 1F de l'objet communicant 1. L'authentification repose sur une méthode connue non détaillée ici qui utilise la clé privée et le certificat mémorisés dans l'élément de sécurité 1F de l'objet connecté 1.

La plate-forme de gestion des droits 3 identifie également (étape E40) les terminaux de communication qui se situent à proximité de l'objet communicant 1. Pour ce faire, la plate-forme de gestion des droits 3 détermine la localisation géographique de la passerelle 8 à partir de l'adresse IP de la passerelle 8. L'objet connecté 1 est de fait situé à proximité de la passerelle 8. D'autre part, la plate-forme de gestion des droits 3 géolocalise les terminaux de communication dont la position se situe à une distance inférieure à une valeur prédéterminée de celle de la passerelle 8, cette valeur prédéterminée étant choisi en fonction de la précision de la technique de géolocalisation employée.

En variante, la plate-forme 3 de gestion des droits peut géolocaliser les terminaux de communication à partir d'information de localisation envoyée par les terminaux de communication à cette plate-forme 3.

La plate-forme 3 de gestion des droits établit, lors d'une étape E50, une liste d'identifiants d'objets communicants ayant demandé l'attribution de droits d'accès au réseau 4 pendant un laps de temps prédéterminé précédant la réception du message de signalement M1. Il est à noter que cette liste contient au moins l'identifiant IDU de l'objet communicant 1.

La plate-forme de gestion des droits 3 transmet (étape E60) ensuite aux terminaux identifiés au cours de l'étape E40 un message M2 d'identification comportant la liste des identifiants établie lors de l'étape E50.

Dans une étape suivante, l'utilisateur U visualise (étape E65) sur son terminal de communication 2 connecté au réseau de communication 4, la liste reçue de la plate-forme 3 indiquant les objets communicants qui sont localisés à proximité de son terminal 2.

En variante, l'utilisateur U visualise sur son terminal 2 l'ensemble des objets communicants appartenant à la liste reçue de la plate-forme 3 et ayant envoyé au terminal 2 un message d'information INFO au cours de l'étape E15 indiquant qu'ils ont également au préalable envoyés un message de signalement à la plate-forme 3. Le message d'information INFO permet donc de limiter le nombre d'objets communicants dans la liste présentée à l'utilisateur. On comprend que dans une zone géographique dense, cette fonctionnalité peut éviter à l'utilisateur de recevoir une liste trop longue d'objets.

Lors de l'étape E65, l'utilisateur U sélectionne également l'objet communicant 1 dans la liste d'objets communicants présentée par le terminal 2. Grâce à cette sélection, l'utilisateur confirme qu'il souhaite attribuer des droits délégués à l'objet communicant 1.

Le terminal 2 transmet alors (étape E70) à la plate-forme 3 un message M3 contenant l'identifiant IDU de l'objet communicant 1 sélectionné par l'utilisateur U.

Sur réception du message M3, la plate-forme 3 de gestion des droits identifie (étape E75) l'utilisateur U du terminal 2 et détermine (étape E80), à partir des droits initiaux attribués à cet utilisateur U, les droits attribuables CRD1 à l'objet communicant 1.

Dans une étape suivante E90, la plate-forme 3 de gestion des droits transmet au terminal 2 un message M4 contenant une liste de droits attribuables à l'objet communicant 1. La liste de droits attribuables est générée à partir des droits initiaux de l'utilisateur, et comprend des droits d'accès au réseau qui peuvent être délégués à l'objet communicant 1. Les droits attribuables sont définis de manière à rester dans la limite des droits initiaux.

L'utilisateur U visualise (étape E95) sur son terminal de communication 2 la liste des droits attribuables à l'objet communicant 1 et définit, lors d'une étape E100, les droits délégués CRD2 qu'il souhaite attribuer à l'objet communicant 1. Dans l'exemple décrit ici, l'utilisateur U souhaite attribuer à l'objet communicant 1 un droit d'accès au deuxième réseau d'accès du réseau 4 de communication, c'est-à-dire au réseau d'accès sans fil.

Le terminal 2 génère alors, lors d'une étape E110, un message M5 de demande d'établissement de droits délégués contenant l'identifiant IDU de l'objet communicant 1 sélectionné et les droits délégués CRD2 sélectionnés par l'utilisateur, en l'espèce le droit d'accéder au réseau de communication via le deuxième réseau d'accès.

Le terminal 2 envoie alors, lors d'une étape E120, à la plate-forme de gestion 3 le message M5 de demande d'établissement de droits délégués.

La plate-forme de gestion des droits 3 vérifie, lors d'une étape E130, que le message M5 de demande d'établissement de droits en provenance du terminal de communication 2 et le message M1 de signalement en provenance de l'objet communicant 1 ont été reçus dans un intervalle de temps T prédéterminé. L'intervalle de temps T permet de tenir compte du délai nécessaire pour que l'utilisateur U puisse faire son choix sur le terminal 2 et de délais habituels dans l'envoi des messages à travers le réseau de communication 4 et d'abandonner automatiquement la configuration de droits délégués en cours lorsque le délai est supérieur à l'intervalle de temps paramétrable T.

Dans une étape suivante E140, la plate-forme de gestion des droits 3 crée un profil de communication PROF pour l'objet connecté 1 et enregistre dans la base de données de droits, les droits accordés à l'objet connecté 1. Le profil de communication PROF comporte notamment une clé d'authentification Ki₁ et un identifiant IMSI₁ destinés à permettre à l'objet communicant 1 d'accéder au réseau de communication 4. L'activation du profil PROF consiste à ajouter dans la base de données associées au HLR du réseau des informations comprenant, notamment, la clé d'authentification Ki₁ et le numéro IMSI₁ associés à l'objet communicant 1.

Dans une étape E150 suivante, la plate-forme de gestion des droits 3 transmet (étape E150) alors le profil de communication PROF créé pour l'objet communicant 1 à l'élément de sécurité 1F de l'objet 1. Cette transmission du profil PROF s'effectue par l'intermédiaire du canal de communication sécurisé établi entre l'élément de sécurité 1F de la montre connectée 1 et la plate-forme 3 de gestion.

Après sauvegarde (étape E160) du profil de communication PROF reçu de la plate-forme de gestion des droits 3, l'objet communicant 1 peut accéder au réseau de communication 4 grâce à ces droits qui lui sont propres.

Ainsi, grâce au procédé d'obtention de droits, l'objet communicant 1 peut accéder au réseau 4 par tout point d'accès compatible avec ses droits délégués et son module de communication 1E, cet autre point d'accès étant adapté pour recevoir des demandes d'accès au réseau en provenance de l'objet communicant 1 et pour relayer ces demandes au réseau qui se charge de mettre en œuvre l'authentification réseau avec l'objet communicant 1.

Dans l'exemple décrit précédemment, l'objet connecté 1 peut ainsi accéder au réseau via la passerelle 8 ou via une deuxième passerelle (non représentée sur la figure 1) différente de la passerelle 8 de l'utilisateur U. Cette deuxième passerelle est par exemple un point d'accès public géré par l'opérateur du réseau de communication 4.

En variante, la deuxième passerelle est une passerelle résidentielle d'un autre utilisateur du réseau 4, cette passerelle résidentielle ayant été configurée pour recevoir des demandes d'accès au réseau en provenance de tout objet communicant conforme à l'invention et pour relayer ces demandes au réseau.

Ainsi la deuxième passerelle intègre une fonction « RAS » (en anglais « Remote Access Server »). Cette fonction RAS permet aux objets ayant obtenu des droits d'accès délégués de se connecter à Internet via cette deuxième passerelle conformément à la procédure suivante. L'objet communicant 1 envoie une demande de connexion contenant son IMSI₁, la deuxième passerelle informe le HLR de la demande de l'objet. Le HLR, en réponse, transmet à la deuxième passerelle un ensemble de données lui permettant d'authentifier l'objet et de chiffrer les données échangées, sur la partie radio, entre l'objet et la deuxième passerelle. Ces données sont notamment de type {(Aléa 1, XResp1, Kc1, ...) ; (Aléa 2, XResp2, Kc2, ...) ; (Aléa 3, XResp3, Kc3, ...) ; (Aléa 4, XResp4, Kc4, ...) ; ... ; (Aléa n, XRespn, Kcn, ...)} ou les données Kcᵢ sont des clés de chiffrement des données sur le lien radio entre l'objet communicant 1 et la deuxième passerelle. La deuxième passerelle envoie le challenge « Aléa 1 » à l'objet communicant 1. L'objet calcule une réponse Resp1 (dépendant de Aléa 1 et de Ki₁) et la transmet à la deuxième passerelle. Cette dernière compare Resp1 à XResp1 (Expected response 1, indiquée par le HLR). Si les deux réponses sont identiques l'objet est authentifié et la deuxième passerelle lui fournit les paramètres de connexion à Iinternet : adresse IP, adresse DNS, adresse passerelle par défaut etc. A Intervalles de temps réguliers, la deuxième passerelle ré-authentifie l'objet communicant 1 en lui envoyant un nouvel Aléa i.

Par la suite, sur requête de l'utilisateur U, la plate-forme 3 de gestion des droits transmet au terminal 2 la liste des objets communicants qui sont associés à l'abonnement de l'utilisateur U.

Ce dernier peut ainsi visualiser sur son terminal 2, l'ensemble des objets associés à son abonnement.

Dans un exemple de réalisation, l'utilisateur U peut retirer des droits délégués qu'il a précédemment accordés à un objet communicant, soit en raison d'une cession de cet objet à un tiers, soit en raison du vol ou de la perte de cet objet, etc.

L'utilisateur U peut sélectionner l'objet communicant 1 à partir d'un menu de son terminal de communication 2. Le terminal de communication 2 transmet un message de dé-association de l'objet communicant 1 à la plate-forme 3 de gestion des droits.

Sur réception de ce message de dé-association, la plate-forme 3 de gestion des droits désactive le profil de communication de l'objet communicant 1. La désactivation du profil consiste à supprimer dans le centre d'authentification du réseau la donnée comprenant la clé d'authentification Ki₁ et le numéro IMSI₁ associés à l'objet communicant 1 lors de la création des droits délégués. A partir de ce moment, l'objet communicant 1 ne peut alors plus accéder au réseau de communication 4.

La plate-forme 3 de gestion des droits peut également, sur réception du message de dé-association, envoyer un message de désactivation de droits à l'élément de sécurité 1F de l'objet communicant 1.

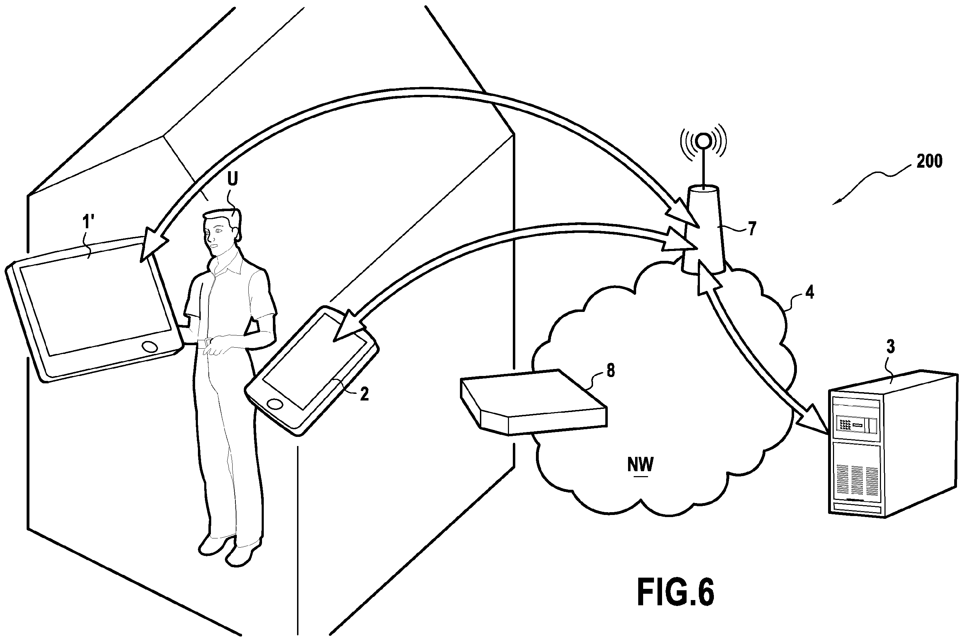

Nous allons maintenant décrire en référence à la **figure 6****,** un deuxième exemple de mise en œuvre de l'invention.

Par souci de simplification, des références identiques sont données sur cette figure aux éléments communs avec le premier exemple illustré à la figure 1.

Dans ce deuxième exemple, le système 200 de gestion des droits comprend :
- un objet communicant 1';
- le terminal 2 de communication de l'utilisateur U ; et
- la plate-forme de gestion des droits 3.

Dans cet exemple, l'objet communicant 1' comprend également un modem d'accès au réseau cellulaire 3G/4G qui lui permet d'accéder au réseau de communication 4 par l'intermédiaire de nœuds d'accès. L'objet communicant 1' est par exemple une tablette tactile dont le module de communication est apte à se connecter au réseau d'accès WiFi et au réseau cellulaire.

Dans l'exemple envisagé ici, l'utilisateur U dispose également de droits initiaux correspondant à un abonnement internet et mobile au réseau de communication 4, ces droits initiaux permettant également d'attribuer des droits délégués à un nombre maximal de deux objets connectés.

Conformément à l'invention, l'utilisateur U initie l'envoi, depuis la tablette tactile 1', d'un message de signalement M1' à destination du réseau de communication 4

Le message de signalement M1' transite indifféremment sur le réseau d'accès cellulaire ou sur le réseau d'accès WiFi. Par exemple, l'objet communicant 1' choisit le réseau d'accès qui dispose de la meilleure bande passante. Dans le cas où le message de signalement transite par le réseau WiFi, le message est reçu par la passerelle résidentielle 8 qui est configurée pour recevoir des demandes de signalement provenant d'objets communicants et pour les transférer vers la plate-forme de gestion des droits 3. Dans le cas où le message de signalement M1' transite par le réseau cellulaire, le message est reçu par nœud d'accès 7 qui le relaie à la plate-forme de gestion des droits 3. Dans les deux cas, à ce stade, l'accès au réseau par l'objet communicant l'est limité.

Sur réception du message de signalement Ml', la plate-forme de gestion des droits 3 authentifie l'objet communicant 1' et établit un canal de communication sécurisé avec l'élément de sécurité 1F de l'objet communicant 1'.

La plate-forme de gestion des droits 3 identifie les terminaux de communication qui se situent à proximité de l'objet communicant 1' conformément à l'étape E40 décrite précédemment. Dans le cas où le point d'accès nominal est le nœud d'accès 7, la plate-forme 3 peut utiliser toute méthode connue pour déterminer la position de l'objet communicant 1'. Par exemple, une méthode par triangulation peut être utilisée. La plate-forme de gestion de droits 3 établit une liste des identifiants d'objets communicant qui ont demandé l'attribution de droits délégués, conformément à l'étape E50 décrite précédemment. La plate-forme de gestion des droits 3 transmet (étape E60) ensuite aux terminaux identifiés un message M2' d'identification comportant la liste des identifiants établie lors de l'étape E50.

L'utilisateur U visualise sur le terminal 2 de communication la liste des objets communicants localisés à proximité et sélectionne l'objet communicant 1' auquel il souhaite accorder des droits délégués (étape E65).

Le terminal 2 transmet alors (étape E70) à la plate-forme 3 un message M3' contenant l'identifiant IDU' de l'objet communicant 1' sélectionné par l'utilisateur U.

Sur réception du message M3', la plate-forme 3 de gestion des droits identifie (étape E75) l'utilisateur U du terminal 2 et détermine (étape E80), à partir des droits initiaux attribués à cet utilisateur U, les droits attribuables CRD1' à l'objet communicant 1

Dans une étape suivante E90, la plate-forme 3 de gestion des droits transmet au terminal 2 un message M4' contenant la liste de droits attribuables à l'objet communicant 1'.

L'utilisateur U visualise (étape E95) sur son terminal de communication 2 la liste des droits attribuables à l'objet communicant 1' et définit, lors d'une étape E100, les droits délégués CRD2' qu'il souhaite attribuer à l'objet communicant 1'. Dans l'exemple décrit ici, l'utilisateur U souhaite attribuer à l'objet communicant 1' un droit d'accès au réseau d'accès cellulaire du réseau 4 de communication.

Le terminal 2 génère alors, lors d'une étape E110, un message M5' de demande d'établissement de droits délégués CRD2' contenant l'identifiant IDU' de l'objet communicant 1' sélectionné et les droits délégués CRD2' sélectionnés par l'utilisateur, en l'espèce le droit d'accéder au réseau de communication via le réseau d'accès cellulaire.

Le terminal 2 envoie alors, lors d'une étape E120, à la plate-forme de gestion 3 le message M5' de demande d'établissement de droits délégués.

La plate-forme de gestion des droits 3 vérifie, lors d'une étape E130, que le message M5' de demande d'établissement de droits en provenance du terminal de communication 2 et le message M1' de signalement en provenance de l'objet communicant 1 ont été reçus dans un intervalle de temps T prédéterminé. L'intervalle de temps T permet de tenir compte de délais inhabituels dans l'envoi des messages à travers le réseau de communication 4 et d'abandonner automatiquement la configuration de droits délégués en cours lorsque le délai est supérieur à l'intervalle de temps paramétrable T.

Dans une étape suivante E140, la plate-forme de gestion de droits 3 crée un profil de communication pour l'objet connecté 1' et enregistre dans la base de données de droits, les droits accordés à l'objet connecté 1'

Dans une étape E140 suivante, la plate-forme de gestion des droits 3 transmet (étape E150) alors le profil de communication créé pour l'objet communicant 1' à l'élément de sécurité 1F' de l'objet 1'. Cette transmission des droits délégués CRD2' s'effectue par l'intermédiaire du canal de communication sécurisé établi entre l'élément de sécurité 1F' de l'objet communicant l'et la plate-forme 3 de gestion.

Après sauvegarde (étape E160) du profil de communication reçu de la plate-forme de gestion des droits 3, l'objet communicant 1' peut accéder au réseau de communication 4 grâce à ces droits qui lui sont propres par l'intermédiaire des points d'accès cellulaires du réseau de communication 4.

## Revendications

1. Procédé de gestion des droits d'accès à un réseau d'un objet communicant (1, 1'), ledit procédé étant mis en œuvre par une plate-forme (3) de gestion des droits d'un réseau de communication (4), ledit procédé comprenant :
- une étape (E20) de réception d'un message (M1, M1') de signalement en provenance d'un objet communicant (1, 1') ;
- le procédé étant **caractérisé en ce qu'**il comprend en outre :
- une étape (E60) d'envoi à au moins un dispositif (2) localisé à proximité dudit objet communicant (1, 1'), d'une liste comportant au moins un identifiant d'objet communicant localisé à proximité dudit dispositif (2) ;
- une étape (E70) de réception, en provenance du dispositif (2), d'un message (M3) comportant l'identifiant (IDU, IDU') d'un objet communicant de la liste, le dispositif (2) disposant de droits d'accès au réseau de communication, dits droits initiaux, associés à un utilisateur du dispositif;
- une étape (E90) d'envoi audit dispositif (2) d'un message (M4, M4') de description contenant une liste de droits attribuables (CRD1, CRD1') à l'objet sélectionné (1, 1'), lesdits droits attribuables (CRD1, CRD1') étant définis à partir desdits droits initiaux ;
- une étape (E120) de réception, en provenance dudit dispositif (2), d'un message de demande (M5, M5') d'établissement de droits, comprenant une description de droits propres à l'objet, dits droits délégués (CRD2, CRD2'), sélectionnés parmi la liste de droits attribuables;
- une étape (E140) de création d'un profil de communication (PROF) associé aux droits délégués ; et
- une étape (E150) d'envoi dudit profil (PROF) audit objet (1, 1') pour sa configuration.

2. Procédé de gestion selon la revendication 1 dans lequel lesdites étapes de création (E140) et d'envoi (E150) dudit profil (PROF) ne sont réalisées que si ladite demande d'établissement de droits (M5, M5') est reçue par ladite plate-forme (3) dans un intervalle de temps prédéterminé compté à partir de la réception dudit message de signalement (M1, M1').

3. Procédé de demande de configuration d'un objet communicant (1, 1'), ledit procédé étant mis en œuvre par un dispositif de communication (2) disposant de droits d'accès à un réseau de communication (4), dits droits initiaux, associés à un utilisateur dudit dispositif (2), ledit procédé comprenant :
- une étape (E60) de réception en provenance d'une plate-forme (3) de gestion des droits du réseau, d'une liste d'au moins un identifiant d'objet communicant ;
- une étape (E65) de sélection d'un objet communicant (1, 1') dans la liste et d'envoi d'un identifiant (IDU, IDU') dudit objet sélectionné (1, 1') à ladite plate-forme (3) ;
- une étape (E90) de réception d'un message (M4, M4') comprenant une liste de droits attribuables (CRD1, CRD1') à l'objet sélectionné (1, 1'), lesdits droits attribuables (CRD1, CRD1') étant définis à partir desdits droits initiaux par ladite plate-forme (3) ; et
- une étape (E120) de transmission à ladite plate-forme (3) d'une demande (M5, M5') d'établissement de droits propres à l'objet (1, 1'), dits droits délégués (CRD2, CRD2'), sélectionnés parmi la liste de droits attribuables.

4. Procédé selon la revendication 1 ou 2 comprenant les étapes supplémentaires suivantes mises en œuvre par l'objet communicant pour obtenir des droits (CRD2, CRD2') d'accès au réseau de communication (4), ledit objet communicant disposant initialement de droits limités à un échange de données avec la plate-forme (3) de gestion des droits dudit réseau, les étapes supplémentaires mises en œuvre par l'objet communicant comprenant:
- une étape (E10) d'émission d'un message (M1, M1') de signalement à destination de ladite plate-forme (3) ;
- une étape (E150) de réception du profil de communication (PROF) propre audit réseau (4), ledit profil étant associé dans le réseau à des droits propres audit objet (1, 1'), dits droits délégués (CRD2, CRD2'), sélectionnés par le dispositif de communication (2) parmi une liste de droits attribuables, lesdits droits attribuables étant définis à partir de droits d'accès au réseau dudit dispositif de communication (2), dits droits initiaux, associés à un utilisateur dudit objet, les droits (CRD2, CRD2') délégués étant adaptés pour permettre à l'objet communicant (1, 1') d'accéder au réseau de communication (4).

5. Procédé d'obtention de droits selon la revendication 4 dans lequel le profil de communication (PROF) est reçu à travers un canal sécurisé établi entre ladite plate-forme de gestion des droits et un élément de sécurité (1F, 1F') de l'objet communicant.

6. Procédé d'obtention de droits selon la revendication 4 ou 5 comprenant avant ladite étape (E150) de réception, une étape (E15) d'émission à destination d'au moins un dispositif de communication (2) d'un message d'information (INFO) indiquant que ledit objet communicant (1, 1') a préalablement envoyé ledit message de signalement (M1, M1').

7. Programme d'ordinateur comportant des instructions pour l'exécution des étapes du procédé de demande de configuration d'un objet communicant selon la revendication 3 lorsque ledit programme est exécuté par un dispositif mobile.

8. Support d'enregistrement lisible par un ordinateur sur lequel est enregistré un programme d'ordinateur comprenant des instructions pour l'exécution des étapes du procédé de demande de configuration d'un objet communicant selon la revendication 3.

9. Plate-forme (3) de gestion des droits d'un objet communicant (1, 1'), ladite plate-forme (3) étant associée à un réseau (4) de communication, ladite plate-forme (3) comprenant :
- un module (3B1) de réception d'un message (M1, M1') de signalement en provenance d'un objet communicant (1, 1') ;
- ladite plate-forme (3) étant **caractérisée en ce qu'**il comprend en outre :
- un module (3B2) d'envoi à au moins un dispositif (2) localisé à proximité dudit objet communicant (1, 1'), d'une liste comportant au moins un identifiant d'objet communicant localisé à proximité dudit dispositif (2) ;
- un module (3B2) de réception, en provenance du dispositif (2), d'un message (M3) comportant l'identifiant (IDU, IDU') d'un objet communicant de la liste, le dispositif (2) disposant de droits d'accès au réseau de communication, dits droits initiaux, associés à un utilisateur du dispositif;
- un module (3B2) d'envoi audit dispositif (2) d'un message (M4, M4') de description contenant une liste de droits attribuables (CRD1, CRD1') à l'objet sélectionné (1, 1'), lesdits droits attribuables (CRD1, CRD1') étant définis à partir desdits droits initiaux ;
- un module (3B2) de réception, en provenance dudit dispositif (2), d'un message de demande (M5, M5') d'établissement de droits, comprenant une description de droits propres à l'objet, dits droits délégués (CRD2, CRD2'), sélectionnés parmi la liste de droits attribuables;
- un module (3B3) de création d'un profil de communication (PROF) associé aux droits délégués ; et
- un module (3B1) d'envoi dudit profil (PROF) audit objet (1, 1') pour sa configuration.

10. Dispositif de demande de configuration d'un objet communicant (1, 1'), ledit dispositif disposant de droits d'accès à un réseau de communication (4), dits droits initiaux, associés à un utilisateur dudit dispositif (2), ledit dispositif comprenant :
- un module (2B1) de réception en provenance d'une plate-forme (3) de gestion des droits du réseau, d'une liste d'au moins un identifiant d'objet communicant ;
- un module (2B2) de sélection d'un objet communicant (1, 1') dans la liste et d'envoi (2B1) d'un identifiant (IDU, IDU') dudit objet sélectionné (1, 1') à ladite plate-forme (3) ;
- un module (2B1) de réception d'un message (M4, M4') comprenant une liste de droits attribuables (CRD1, CRD1') à l'objet sélectionné (1, 1'), lesdits droits attribuables (CRD1, CRD1') étant définis à partir desdits droits initiaux par ladite plate-forme (3) ; et
- un module (2B1) de transmission à ladite plate-forme (3) d'une demande (M5, M5') d'établissement de droits propres à l'objet (1, 1'), dits droits délégués (CRD2, CRD2'), sélectionnés parmi la liste de droits attribuables.

11. Système comportant :
- une plate-forme (3) de gestion des droits d'un objet communicant selon la revendication 9, et
- un objet communicant (1, 1') disposant initialement de droits limités à un échange de données avec ladite plate-forme (3) ledit objet comprenant un module (1B1) d'émission d'un message (M1, M1') de signalement à destination de ladite plate-forme (3) ;
- ladite plate-forme (3) comprenant un module (1B2) de réception apte à recevoir un profil de communication (PROF) propre audit réseau (4), ledit profil étant associé dans le réseau à des droits propres audit objet (1, 1'), dits droits délégués (CRD2, CRD2'), sélectionnés par un dispositif de communication (2) parmi une liste de droits attribuables, lesdits droits attribuables étant définis à partir de droits d'accès au réseau dudit dispositif de communication (2), dits droits initiaux, associés à un utilisateur dudit objet,
les droits (CRD2, CRD2') délégués étant adaptés pour permettre à l'objet communicant (1, 1') d'accéder au réseau de communication (4).

12. Système (100, 200) de gestion des droits comprenant :
• un système selon la revendication 11 ; et
• au moins un dispositif de demande de configuration (2) selon la revendication 10.

## Patentansprüche

1. Verfahren zur Verwaltung der Zugriffsrechte eines kommunizierenden Objekts (1, 1') auf ein Netz, wobei das Verfahren von einer Plattform (3) zur Verwaltung der Rechte eines Kommunikationsnetzes (4) durchgeführt wird, wobei das Verfahren umfasst:
- einen Schritt (E20) des Empfangs einer Signalisierungsnachricht (M1, M1') von einem kommunizierenden Objekt (1, 1');
- wobei das Verfahren **dadurch gekennzeichnet ist, dass** es außerdem umfasst:
- einen Schritt (E60) des Sendens, an wenigstens eine in der Nähe des kommunizierenden Objekts (1, 1') befindliche Vorrichtung (2), einer Liste, die wenigstens eine Kennung eines kommunizierenden Objekts enthält, das sich in der Nähe der Vorrichtung (2) befindet;
- einen Schritt (E70) des Empfangs, von der Vorrichtung (2), einer Nachricht (M3), welche die Kennung (IDU, IDU') eines kommunizierenden Objekts der Liste enthält, wobei die Vorrichtung (2) über Zugriffsrechte auf das Kommunikationsnetz, ursprüngliche Rechte genannt, verfügt, die einem Benutzer der Vorrichtung zugeordnet sind;
- einen Schritt (E90) des Sendens, an die Vorrichtung (2), einer Beschreibungsnachricht (M4, M4'), die eine Liste von dem ausgewählten Objekt (1, 1') zuweisbaren Rechten (CRD1, CRD1') enthält, wobei die zuweisbaren Rechte (CRD1, CRD1') ausgehend von den ursprünglichen Rechten definiert sind;
- einen Schritt (E120) des Empfangs, von der Vorrichtung (2), einer Anforderungsnachricht (M5, M5') für die Festlegung von Rechten, welche eine Beschreibung von dem Objekt eigenen Rechten, delegierte Rechte (CRD2, CRD2') genannt, umfasst, die aus der Liste zuweisbarer Rechte ausgewählt sind;
- einen Schritt (E140) der Erzeugung eines Kommunikationsprofils (PROF), das den delegierten Rechten zugeordnet ist; und
- einen Schritt (E150) des Sendens des Profils (PROF) an das Objekt (1, 1') für seine Konfiguration.

2. Verfahren zur Verwaltung nach Anspruch 1, wobei die Schritte der Erzeugung (E140) und des Sendens (E150) des Profils (PROF) nur ausgeführt werden, falls die Anforderungsnachricht für die Festlegung von Rechten (M5, M5') von der Plattform (3) innerhalb eines vorbestimmten Zeitintervalls nach dem Empfang der Signalisierungsnachricht (M1, M1') empfangen wird.

3. Verfahren zur Anforderung der Konfiguration eines kommunizierenden Objekts (1, 1'), wobei das Verfahren von einer Kommunikationsvorrichtung (2) durchgeführt wird, die über Zugriffsrechte auf ein Kommunikationsnetz (4), ursprüngliche Rechte genannt, verfügt, die einem Benutzer der Vorrichtung (2) zugeordnet sind, wobei das Verfahren umfasst:
- einen Schritt (E60) des Empfangs, von einer Plattform (3) zur Verwaltung der Rechte des Netzes, einer Liste von wenigstens einer Kennung eines kommunizierenden Objekts;
- einen Schritt (E65) der Auswahl eines kommunizierenden Objekts (1, 1') in der Liste und des Sendens einer Kennung (IDU, IDU') des ausgewählten Objekts (1, 1') an die Plattform (3) ;
- einen Schritt (E90) des Empfangs einer Nachricht (M4, M4'), welche eine Liste von dem ausgewählten Objekt (1, 1') zuweisbaren Rechten (CRD1, CRD1') umfasst, wobei die zuweisbaren Rechte (CRD1, CRD1') ausgehend von den ursprünglichen Rechten durch die Plattform (3) definiert werden; und
- einen Schritt (E120) der Übertragung, an die Plattform (3), einer Anforderung (M5, M5') für die Festlegung von dem Objekt (1, 1') eigenen Rechten, delegierte Rechte (CRD2, CRD2') genannt, die aus der Liste zuweisbarer Rechte ausgewählt sind.

4. Verfahren nach Anspruch 1 oder 2, welches die folgenden zusätzlichen Schritte umfasst, die von dem kommunizierenden Objekt ausgeführt werden, um Rechte (CRD2, CRD2') des Zugriffs auf das Kommunikationsnetz (4) zu erlangen, wobei das kommunizierende Objekt ursprünglich über Rechte verfügt, die auf einen Datenaustausch mit der Plattform (3) zur Verwaltung der Rechte des Netzes begrenzt sind, wobei die von dem kommunizierenden Objekt ausgeführten zusätzlichen Schritte umfassen:
- einen Schritt (E10) des Sendens einer Signalisierungsnachricht (M1, M1') an die Plattform (3);
- einen Schritt (E150) des Empfangs des Kommunikationsprofils (PROF), das dem Netz (4) eigen ist, wobei das Profil im Netz Rechten zugeordnet ist, die dem Objekt (1, 1') eigen sind, delegierte Rechte (CRD2, CRD2') genannt, die von der Kommunikationsvorrichtung (2) aus einer Liste zuweisbarer Rechte ausgewählt werden, wobei die zuweisbaren Rechte ausgehend von Zugriffsrechten der Kommunikationsvorrichtung (2) auf das Netz, ursprüngliche Rechte genannt, die einem Benutzer des Objekts zugeordnet sind, definiert sind, wobei die delegierten Rechte (CRD2, CRD2') dafür ausgelegt sind, dem kommunizierenden Objekt (1, 1') zu ermöglichen, auf das Kommunikationsnetz (4) zuzugreifen.

5. Verfahren zur Erlangung von Rechten nach Anspruch 4, wobei das Kommunikationsprofil (PROF) über einen sicheren Kanal empfangen wird, der zwischen der Plattform zur Verwaltung der Rechte und einem Sicherheitselement (1F, 1F') des kommunizierenden Objekts eingerichtet ist.

6. Verfahren zur Erlangung von Rechten nach Anspruch 4 oder 5, welches vor dem Schritt (E150) des Empfangs einen Schritt (E15) des Sendens, an wenigstens eine Kommunikationsvorrichtung (2), einer Informationsnachricht (INFO) umfasst, die anzeigt, dass das kommunizierende Objekt (1, 1') zuvor die Signalisierungsnachricht (M1, M1') gesendet hat.

7. Computerprogramm, welches Anweisungen zur Ausführung der Schritte des Verfahrens zur Anforderung der Konfiguration eines kommunizierenden Objekts nach Anspruch 3, wenn das Programm von einer mobilen Vorrichtung ausgeführt wird, umfasst.

8. Computerlesbares Aufzeichnungsmedium, auf welchem ein Computerprogramm aufgezeichnet ist, das Anweisungen zur Ausführung der Schritte des Verfahrens zur Anforderung der Konfiguration eines kommunizierenden Objekts nach Anspruch 3 umfasst.

9. Plattform (3) zur Verwaltung der Rechte eines kommunizierenden Objekts (1, 1'), wobei die Plattform (3) einem Kommunikationsnetz (4) zugeordnet ist, wobei die Plattform (3) umfasst:
- ein Modul (3B1) zum Empfang einer Signalisierungsnachricht (M1, M1') von einem kommunizierenden Objekt (1, 1');
- wobei die Plattform (3) **dadurch gekennzeichnet ist, dass** sie außerdem umfasst:
- ein Modul (3B2) zum Senden, an wenigstens eine in der Nähe des kommunizierenden Objekts (1, 1') befindliche Vorrichtung (2), einer Liste, die wenigstens eine Kennung eines kommunizierenden Objekts enthält, das sich in der Nähe der Vorrichtung (2) befindet;
- ein Modul (3B2) zum Empfang, von der Vorrichtung (2), einer Nachricht (M3), welche die Kennung (IDU, IDU') eines kommunizierenden Objekts der Liste enthält, wobei die Vorrichtung (2) über Zugriffsrechte auf das Kommunikationsnetz, ursprüngliche Rechte genannt, verfügt, die einem Benutzer der Vorrichtung zugeordnet sind;
- ein Modul (3B2) zum Senden, an die Vorrichtung (2), einer Beschreibungsnachricht (M4, M4'), die eine Liste von dem ausgewählten Objekt (1, 1') zuweisbaren Rechten (CRD1, CRD1') enthält, wobei die zuweisbaren Rechte (CRD1, CRD1') ausgehend von den ursprünglichen Rechten definiert sind;
- ein Modul (3B2) zum Empfang, von der Vorrichtung (2), einer Anforderungsnachricht (M5, M5') für die Festlegung von Rechten, welche eine Beschreibung von dem Objekt eigenen Rechten, delegierte Rechte (CRD2, CRD2') genannt, umfasst, die aus der Liste zuweisbarer Rechte ausgewählt sind;
- ein Modul (3B3) zur Erzeugung eines Kommunikationsprofils (PROF), das den delegierten Rechten zugeordnet ist; und
- ein Modul (3B1) zum Senden des Profils (PROF) an das Objekt (1, 1') für seine Konfiguration.

10. Vorrichtung zur Anforderung der Konfiguration eines kommunizierenden Objekts (1, 1'), wobei die Vorrichtung über Zugriffsrechte auf ein Kommunikationsnetz (4), ursprüngliche Rechte genannt, verfügt, die einem Benutzer der Vorrichtung (2) zugeordnet sind, wobei die Vorrichtung umfasst:
- ein Modul (2B1) zum Empfang, von einer Plattform (3) zur Verwaltung der Rechte des Netzes, einer Liste von wenigstens einer Kennung eines kommunizierenden Objekts;
- ein Modul (2B2) zur Auswahl eines kommunizierenden Objekts (1, 1') in der Liste und zum Senden (2B1) einer Kennung (IDU, IDU') des ausgewählten Objekts (1, 1') an die Plattform (3);
- ein Modul (2B1) zum Empfang einer Nachricht (M4, M4'), welche eine Liste von dem ausgewählten Objekt (1, 1') zuweisbaren Rechten (CRD1, CRD1') umfasst, wobei die zuweisbaren Rechte (CRD1, CRD1') ausgehend von den ursprünglichen Rechten durch die Plattform (3) definiert werden; und
- ein Modul (2B1) zur Übertragung, an die Plattform (3), einer Anforderung (M5, M5') für die Festlegung von dem Objekt (1, 1') eigenen Rechten, delegierte Rechte (CRD2, CRD2') genannt, die aus der Liste zuweisbarer Rechte ausgewählt sind.

11. System, welches aufweist:
- eine Plattform (3) zur Verwaltung der Rechte eines kommunizierenden Objekts nach Anspruch 9, und
- ein kommunizierendes Objekt (1, 1'), das ursprünglich über Rechte verfügt, die auf einen Datenaustausch mit der Plattform (3) begrenzt sind, wobei das Objekt ein Modul (1B1) zum Senden einer Signalisierungsnachricht (M1, M1') an die Plattform (3) umfasst;
- wobei die Plattform (3) ein Modul (1B2) zum Empfang umfasst, das in der Lage ist, ein Kommunikationsprofil (PROF) zu empfangen, das dem Netz (4) eigen ist, wobei das Profil im Netz Rechten zugeordnet ist, die dem Objekt (1, 1') eigen sind, delegierte Rechte (CRD2, CRD2') genannt, die von einer Kommunikationsvorrichtung (2) aus einer Liste zuweisbarer Rechte ausgewählt werden, wobei die zuweisbaren Rechte ausgehend von Zugriffsrechten der Kommunikationsvorrichtung (2) auf das Netz, ursprüngliche Rechte genannt, die einem Benutzer des Objekts zugeordnet sind, definiert sind,
wobei die delegierten Rechte (CRD2, CRD2') dafür ausgelegt sind, dem kommunizierenden Objekt (1, 1') zu ermöglichen, auf das Kommunikationsnetz (4) zuzugreifen.

12. System (100, 200) zur Verwaltung der Rechte, welches umfasst:
• ein System nach Anspruch 11; und
• wenigstens eine Vorrichtung zur Anforderung der Konfiguration (2) nach Anspruch 10.

## Claims

1. Method for managing the rights of access to a network of a communicating object (1, 1'), said method being implemented by a platform (3) for managing the rights of a communication network (4), said method comprising:
- a step (E20) of receiving a reporting message (M1, M1') originating from a communicating object (1, 1');
- the method being **characterized in that** it further comprises:
- a step (E60) of sending, to at least one device (2) located in proximity to said communicating object (1, 1'), a list comprising at least one communicating object identifier located in proximity to said device (2) ;
- a step (E70) of receiving, originating from the device (2), a message (M3) comprising the identifier (IDU, IDU') of a communicating object of the list, the device (2) having rights of access to the communication network, termed initial rights, which are associated with a user of the device;
- a step (E90) of sending to said device (2) a description message (M4, M4') containing a list of rights (CRD1, CRD1') allottable to the selected object (1, 1'), said allottable rights (CRD1, CRD1') being defined on the basis of said initial rights;
- a step (E120) of receiving, originating from said device (2), a message (M5, M5') requesting establishment of rights, comprising a description of rights which are specific to the object, termed delegated rights (CRD2, CRD2'), selected from among the list of allottable rights;
- a step (E140) of creating a communication profile (PROF) associated with the delegated rights; and
- a step (E150) of sending said profile (PROF) to said object (1, 1') for its configuration.

2. Method for managing according to Claim 1, in which said steps of creating (E140) and of sending (E150) said profile (PROF) are carried out only if said request for establishment of rights (M5, M5') is received by said platform (3) in a predetermined time interval counted from the reception of said reporting message (M1, M1').

3. Method for requesting configuration of a communicating object (1, 1'), said method being implemented by a communication device (2) having rights of access to a communication network (4), termed initial rights, which are associated with a user of said device (2), said method comprising:
- a step (E60) of receiving, originating from a platform (3) for managing the rights of the network, a list of at least one communicating object identifier;
- a step (E65) of selecting a communicating object (1, 1') from the list and of sending an identifier (IDU, IDU') of said selected object (1, 1') to said platform (3);
- a step (E90) of receiving a message (M4, M4') comprising a list of rights (CRD1, CRD1') allottable to the selected object (1, 1'), said allottable rights (CRD1, CRD1') being defined on the basis of said initial rights by said platform (3); and
- a step (E120) of transmitting to said platform (3) a request (M5, M5') for establishment of rights which are specific to the object (1, 1'), termed delegated rights (CRD2, CRD2'), selected from among the list of allottable rights.

4. Method according to Claim 1 or 2 comprising the following additional steps implemented by the communicating object to obtain rights (CRD2, CRD2') of access to the communication network (4), said communicating object initially having rights limited to an exchange of data with the platform (3) for managing the rights of said network, said additional steps implemented by the communicating object comprising:
- a step (E10) of emitting a reporting message (M1, M1') destined for said platform (3); and
- a step (E150) of receiving the communication profile (PROF) specific to said network (4), said profile being associated in the network with rights which are specific to said object (1, 1'), termed delegated rights (CRD2, CRD2'), selected by the communication device (2) from among a list of allottable rights, said allottable rights being defined on the basis of rights of access to the network of said communication device (2), termed initial rights, which are associated with a user of said object, the delegated rights (CRD2, CRD2') being adapted to allow the communicating object (1, 1') to access the communication network (4).

5. Method for obtaining rights according to Claim 4, in which the communication profile (PROF) is received through a secure channel established between said platform for managing the rights and a secure element (1F, 1F') of the communicating object.

6. Method for obtaining rights according to Claim 4 or 5, comprising, before said step (E150) of receiving, a step (E15) of emitting destined for at least one communication device (2) an information message (INFO) indicating that said communicating object (1, 1') has previously sent said reporting message (M1, M1').

7. Computer program comprising instructions for the execution of the steps of the method for requesting configuration of a communicating object according to Claim 3 when said program is executed by a mobile device.

8. Recording medium readable by a computer on which is recorded a computer program comprising instructions for the execution of the steps of the method for requesting configuration of a communicating object according to Claim 3.

9. Platform (3) for managing the rights of a communicating object (1, 1'), said platform (3) being associated with a communication network (4), said platform (3) comprising:
- a module (3B1) for receiving a reporting message (M1, M1') originating from a communicating object (1, 1');
- said platform (3) being **characterized in that** it further comprises:
- a module (3B2) for sending, to at least one device (2) located in proximity to said communicating object (1, 1'), a list comprising at least one communicating object identifier located in proximity to said device (2) ;
- a module (3B2) for receiving, originating from the device (2), a message (M3) comprising the identifier (IDU, IDU') of a communicating object of the list, the device (2) having rights of access to the communication network, termed initial rights, which are associated with a user of the device;
- a module (3B2) for sending to said device (2) a description message (M4, M4') containing a list of rights (CRD1, CRD1') allottable to the selected object (1, 1'), said allottable rights (CRD1, CRD1') being defined on the basis of said initial rights;
- a module (3B2) for receiving, originating from said device (2), a message (M5, M5') requesting establishment of rights, comprising a description of rights which are specific to the object, termed delegated rights (CRD2, CRD2'), selected from among the list of allottable rights;
- a module (3B3) for creating a communication profile (PROF) associated with the delegated rights; and
- a module (3B1) for sending said profile (PROF) to said object (1, 1') for its configuration.

10. Device for requesting configuration of a communicating object (1, 1'), said device having rights of access to a communication network (4), termed initial rights, which are associated with a user of said device (2), said device comprising:
- a module (2B1) for receiving, originating from a platform (3) for managing the rights of the network, a list of at least one communicating object identifier;
- a module (2B2) for selecting a communicating object (1, 1') from the list and for sending (2B1) an identifier (IDU, IDU') of said selected object (1, 1') to said platform (3);
- a module (2B1) for receiving a message (M4, M4') comprising a list of rights (CRD1, CRD1') allottable to the selected object (1, 1'), said allottable rights (CRD1, CRD1') being defined on the basis of said initial rights by said platform (3); and
- a module (2B1) for transmitting to said platform (3) a request (M5, M5') for establishment of rights which are specific to the object (1, 1'), termed delegated rights (CRD2, CRD2'), selected from among the list of allottable rights.

11. System comprising:
- a platform (3) for managing the rights of a communicating object according to Claim 9, and
- a communicating object (1, 1') initially having rights limited to an exchange of data with said platform (3) said object comprising a module (1B1) for emitting a reporting message (M1, M1') destined for said platform (3);
- said platform (3) comprising a receiving module (1B2) able to receive a communication profile (PROF) specific to said network (4), said profile being associated in the network with rights which are specific to said object (1, 1'), termed delegated rights (CRD2, CRD2'), selected by a communication device (2) from among a list of allottable rights, said allottable rights being defined on the basis of rights of access to the network of said communication device (2), termed initial rights, which are associated with a user of said object,
the delegated rights (CRD2, CRD2') being adapted to allow the communicating object (1, 1') to access the communication network (4).

12. System (100, 200) for managing the rights comprising:
• a system according to Claim 11; and
• at least one device for requesting configuration (2) according to Claim 10.
